# EUROPEAN PATENT APPLICATION

(11) **EP 4 844 818 A1**
(43) Date of publication of application: **25.11.2026**
(21) Application number: 26170838.2
(22) Date of filing: 07.04.2026
(51) Int. Cl.: H01M 4/13, H01M 4/38, H01M 4/134, H01M 4/139, H01M 4/1395, H01M 10/42, H01M 10/052, H01M 10/0562, H01M 10/0585, H01M 50/474, H01M 50/477, H01M 50/497

(54) **BATTERY, SOLID-STATE BATTERY, AND METHOD FOR MANUFACTURING BATTERY**

(30) Priority: 21.05.2025 JP 2025084976
(71) Applicant: Toyota Jidosha Kabushiki Kaisha, Toyota-shi, Aichi-ken 471-8571 (JP)
(72) Inventor: SUZUKI, Tomoya, Toyota-shi, Aichi-ken, 471-8571 (JP); KAKISHITA, Kenichi, Toyota-shi, Aichi-ken, 471-8571 (JP); TABUCHI, Takahiro, Toyota-shi, Aichi-ken, 471-8571 (JP); YAMASHITA, Yuji, Toyota-shi, Aichi-ken, 471-8571 (JP); NIDAIRA, Kyoya, Toyota-shi, Aichi-ken, 471-8571 (JP)
(74) Representative: TBK

(57) **Abstract**

There is provided a battery (1) including a first electrode layer (200), a separator layer (300) and a second electrode layer (400) that are stacked in this order, wherein the second electrode layer (400) includes: a central electrode portion (410) that contains a central electrode active material; and an end electrode portion (420) that contains an end electrode active material and is in contact with an end of the central electrode portion (410) in an orthogonal direction orthogonal to a stacking direction. A filling factor of the end electrode portion (420) is smaller than a filling factor of the central electrode portion (410).

## Description

### CROSS REFERENCE TO RELATED APPLICATIONS

This nonprovisional application is based on Japanese Patent Application No. 2025-084976 filed on May 21, 2025 with the Japan Patent Office, the entire contents of which are hereby incorporated by reference.

### BACKGROUND

### Field

The present disclosure relates to a battery, a solid-state battery, and a method for manufacturing a battery.

### Description of the Background Art

For example, Japanese Patent Laying-Open No. 2023-114635 discloses a battery including a positive electrode current collector, a positive electrode active material layer, a separator layer, a negative electrode active material layer, and a negative electrode current collector that are stacked in this order. A filling factor of the negative electrode active material layer is 80%.

### SUMMARY

In the battery described in Japanese Patent Laying-Open No. 2023-114635, the active material layer expands and contracts during charging and discharging of the battery. Therefore, there are needs for suppressing cracking at an end of the active material layer caused by the expansion and contraction.

An object of the present disclosure is to provide a battery and a method for manufacturing a battery, which are capable of suppressing the occurrence of cracking at an end of an active material layer during charging and discharging.

A battery according to the present disclosure is a battery including a first electrode layer, a separator layer and a second electrode layer that are stacked in this order, wherein the second electrode layer includes: a central electrode portion that contains a central electrode active material; and an end electrode portion that contains an end electrode active material and is in contact with an end of the central electrode portion in an orthogonal direction orthogonal to a stacking direction, and a filling factor of the end electrode portion is smaller than a filling factor of the central electrode portion.

A solid-state battery according to the present disclosure is a solid-state battery, wherein in the above-described battery, the separator layer contains a solid electrolyte.

A method for manufacturing a battery according to the present disclosure is a method for manufacturing a battery including a first electrode layer, a separator layer and a second electrode layer that are stacked in this order, the method including a second electrode layer forming step of forming the second electrode layer on the separator layer, wherein the second electrode layer forming step includes: supplying an electrode active material onto the separator layer such that a thickness of an end adjacent to a central portion in an orthogonal direction orthogonal to a stacking direction becomes smaller than a thickness of the central portion in the orthogonal direction; and pressing the electrode active material such that the thickness of the central portion and the thickness of the end become equal to each other.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a plan view of a battery according to an embodiment of the present disclosure.
Fig. 2 is a cross-sectional view taken along line II-II in Fig. 1.
Fig. 3 is a cross-sectional view schematically showing a second electrode layer forming step.
Fig. 4 is a cross-sectional view schematically showing a modification of the second electrode layer forming step.

### DESCRIPTION OF THE PREFERRED EMBODIMENTS

An embodiment of the present disclosure will be described with reference to the drawings. In the drawings referred to below, the same or corresponding members are denoted by the same reference numerals.

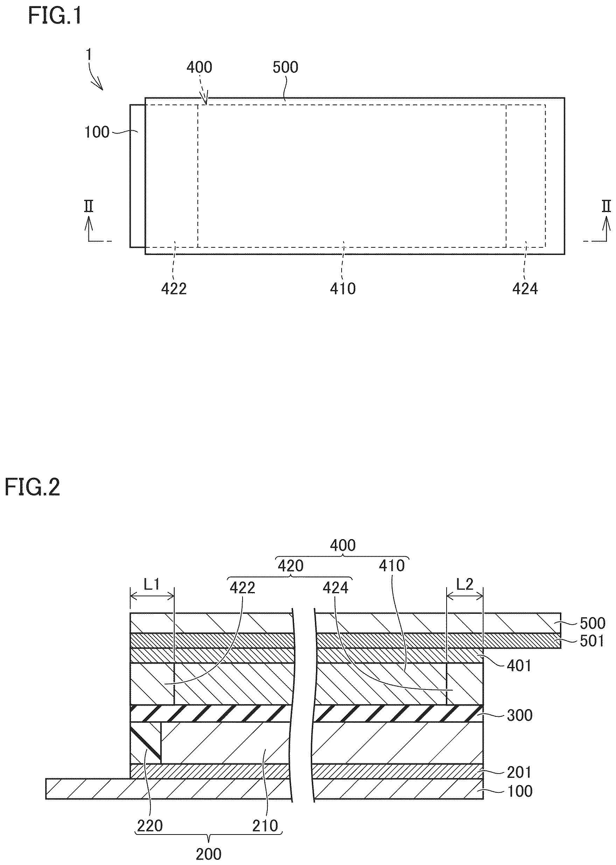

Fig. 1 is a plan view of a battery according to an embodiment of the present disclosure. Fig. 2 is a cross-sectional view taken along line II-II in Fig. 1.

As shown in Figs. 1 and 2, battery 1 includes a first current collector 100, a first electrode layer 200, a separator layer 300, a second electrode layer 400, and a second current collector 500. First current collector 100, first electrode layer 200, separator layer 300, second electrode layer 400, and second current collector 500 are stacked in this order. Hereinafter, a direction in which first current collector 100, first electrode layer 200, separator layer 300, second electrode layer 400, and second current collector 500 are stacked (up-down direction in Fig. 2) is denoted as a stacking direction.

First current collector 100 is made of metal such as aluminum or copper. First current collector 100 is formed into a flat plate or a thin film.

First electrode layer 200 is provided on first current collector 100. In the present embodiment, first electrode layer 200 is stacked on first current collector 100 with a carbon coating 201 interposed therebetween.

Separator layer 300 is provided on first electrode layer 200. Separator layer 300 may contain a solid electrolyte as a main ingredient. Examples of the solid electrolyte include a sulfide solid electrolyte, an oxide solid electrolyte and the like. That is, battery 1 may be a so-called solid-state battery. Alternatively, separator layer 300 may not contain the solid electrolyte as a main ingredient, and a polyolefin-based nonwoven fabric, a polyamide-based nonwoven fabric or a polyimide-based nonwoven fabric may be used.

Second electrode layer 400 is provided on separator layer 300.

Second current collector 500 is provided on second electrode layer 400. In the present embodiment, second current collector 500 is stacked on second electrode layer 400 with a carbon coating 401 interposed therebetween. For example, second current collector 500 may be made of aluminum and a nickel-plated layer 501 may be provided on a surface of second current collector 500 that faces carbon coating 401.

In the present embodiment, first current collector 100 is formed of a positive electrode current collector and first electrode layer 200 is formed of a positive electrode layer. Second current collector 500 is formed of a negative electrode current collector and second electrode layer 400 is formed of a negative electrode layer.

As shown in Fig. 2, first electrode layer 200 has a first electrode portion 210 and a resin portion 220.

First electrode portion 210 contains an NCM-based positive electrode active material.

Resin portion 220 is, for example, made of a mixture of a binder resin and an insulating material. A material such as polyvinylidene fluoride (PVdF), butadiene rubber (BR), polytetrafluoroethylene (PTFE), styrene-butadiene rubber (SBR), or polyacrylic acid (PAA) may be used as the binder resin. An inorganic material such as SiO₂ or Al₂O₃ may, for example, be used as the insulating material and the insulating material may be contained in an amount of 0 to 10% by weight with respect to an amount of the binder. A Young's modulus of resin portion 220 is lower than a Young's modulus of first electrode portion 210. The Young's modulus can be calculated by tensile testing in accordance with JIS Z 2241 and the like. Resin portion 220 is in contact with an end of first electrode portion 210 in an orthogonal direction (left-right direction in Fig. 2) orthogonal to the stacking direction. Resin portion 220 is located between first current collector 100 and separator layer 300. In other words, resin portion 220 faces both first current collector 100 and separator layer 300 in the stacking direction.

As shown in Figs. 1 and 2, second electrode layer 400 has a central electrode portion 410 and an end electrode portion 420.

Central electrode portion 410 contains a central electrode active material. The central electrode active material contains Si.

End electrode portion 420 is in contact with both ends of central electrode portion 410 in the orthogonal direction. End electrode portion 420 may be disposed to be in contact with only one end of central electrode portion 410. For example, end electrode portion 420 may be a portion that extends over a range of equal to or more than 1 mm and equal to or less than 100 mm from the end of second electrode layer 400, and a width of end electrode portion 420 may be equal to or more than 1% and equal to or less than 15% of a width of central electrode portion 410. End electrode portion 420 contains an end electrode active material. The end electrode active material contains Si. In the present embodiment, the end electrode active material is the same as the central electrode active material. However, the end electrode active material may be different from the central electrode active material. In Fig. 2, end electrode portion 420 is shown by hatching different from hatching of central electrode portion 410.

The end electrode active material may have a porosity higher than a porosity of the central electrode active material. In this case, the central electrode active material may contain Si and the end electrode active material may contain porous Si in which a surface of an Si particle has many pores.

A filling factor of end electrode portion 420 is smaller than a filling factor of central electrode portion 410. The filling factor is calculated in accordance with basis weight (mg/cm²)/{film thickness (µm)×density (g/cm³)}. The filling factors can also be compared by weight comparison between end electrode portion 420 and central electrode portion 410. The filling factor of central electrode portion 410 is, for example, approximately 70% to 90%. The filling factor of end electrode portion 420 is, for example, approximately 50% to 75%. The filling factor from an electrode state can be measured by using an optical method for determining an area of a material and an area of visible pores through microscopic observation of a sample cross section. For example, the filling factor can be calculated by observing end electrode portion 420 in a field of view onto which the whole of end electrode portion 420 in a thickness direction is projected, and calculating a volume of end electrode portion 420 excluding the pores and a volume of end electrode portion 420 including the pores.

As shown in Figs. 1 and 2, end electrode portion 420 has an insulating facing element 422 and an electrode facing element 424.

Insulating facing element 422 is in contact with one (left in Fig. 2) end of central electrode portion 410 in the orthogonal direction. Insulating facing element 422 faces at least a part of resin portion 220 with separator layer 300 interposed therebetween. In the present embodiment, in the stacking direction, insulating facing element 422 faces the whole of resin portion 220 in the orthogonal direction.

Electrode facing element 424 is in contact with the other (right in Fig. 2) end of central electrode portion 410 in the orthogonal direction. Electrode facing element 424 faces first electrode portion 210 with separator layer 300 interposed therebetween.

As shown in Fig. 2, a length L1 of insulating facing element 422 in the orthogonal direction is longer than a length L2 of electrode facing element 424 in the orthogonal direction.

The filling factor of end electrode portion 420 gradually becomes smaller with increasing distance from central electrode portion 410 in the orthogonal direction. In the present embodiment, filling factors of both insulating facing element 422 and electrode facing element 424 gradually become smaller with increasing distance from central electrode portion 410 in the orthogonal direction.

A volume of end electrode portion 420 is more than 0% and equal to or less than 15% of a total volume of second electrode layer 400. That is, a sum of a volume of insulating facing element 422 and a volume of electrode facing element 424 is more than 0% and equal to or less than 15% of the total volume of second electrode layer 400.

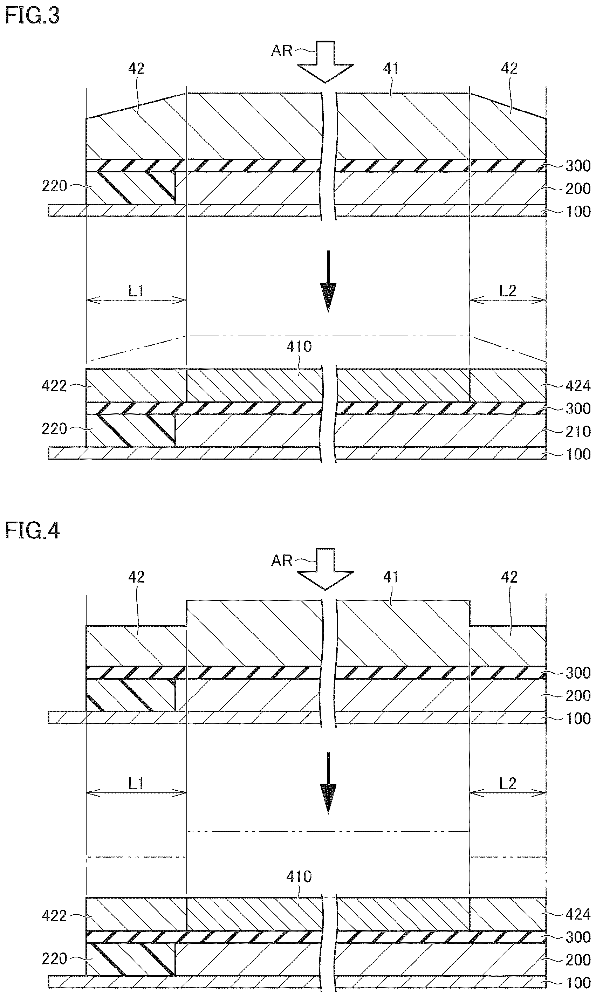

Next, a method for manufacturing battery 1 according to the present embodiment will be described with reference to Fig. 3. This manufacturing method includes a first electrode layer forming step, a separator layer forming step, and a second electrode layer forming step.

In the first electrode layer forming step, first electrode layer 200 is formed on first current collector 100. In the first electrode layer forming step in the present embodiment, first electrode portion 210 containing the NCM-based positive electrode active material and resin portion 220 are simultaneously supplied onto carbon coating 201 by using, for example, a die and are pressed.

In the separator layer forming step, separator layer 300 is supplied onto first electrode layer 200 and is pressed.

In the second electrode layer forming step, second electrode layer 400 is formed on separator layer 300. In the second electrode layer forming step, as shown in Fig. 3, the electrode active material containing Si is first supplied onto separator layer 300 such that a thickness of an end 42 adjacent to a central portion 41 in the orthogonal direction becomes smaller than a thickness of central portion 41 in the orthogonal direction. In the present embodiment, the electrode active material is supplied onto separator layer 300 such that the thickness gradually becomes smaller toward the end in the orthogonal direction (left-right direction in Fig. 3).

Thereafter, as shown by an arrow AR in Fig. 3, the electrode active material is pressed such that the thickness of central portion 41 and the thickness of end 42 become equal to each other. As a result, the filling factor of end electrode portion 420 becomes smaller than the filling factor of central electrode portion 410. Similarly to Fig. 2, in Fig. 3, end electrode portion 420 that is relatively smaller in filling factor is shown by hatching different from hatching of central electrode portion 410.

As described above, in battery 1 according to the present embodiment, the filling factor of end electrode portion 420 is smaller than the filling factor of central electrode portion 410. Therefore, the occurrence of cracking at the end of second electrode layer 400 when second electrode layer 400 expands and contracts during charging and discharging of battery 1 is suppressed.

In addition, in the above-described embodiment, insulating facing element 422 is formed in a region that faces resin portion 220 of first electrode layer 200, i.e., a region where an ion movement path is relatively narrow. Therefore, degradation in battery performance caused by a decrease in filling factor is suppressed.

Although the above-described embodiment presents an example in which first current collector 100 is formed of a positive electrode current collector and first electrode layer 200 is formed of a positive electrode layer, first current collector 100 may be formed of a negative electrode current collector and first electrode layer 200 may be formed of a negative electrode layer.

Although the above-described embodiment presents an example in which the NCM-based positive electrode active material is contained as the electrode active material of first electrode layer 200, the present disclosure is not limited thereto. An NCA-based positive electrode active material may be contained, or an LFP-based positive electrode active material may be contained. Although the above-described embodiment presents an example in which Si is contained as the end electrode active material, the present disclosure is not limited thereto. Carbon may be contained, or an Li alloy may be contained.

As shown in Fig. 4, in the second electrode layer forming step, the electrode active material may be supplied onto separator layer 300 such that the thickness of end 42 becomes substantially uniform in the orthogonal direction.

It will be understood by those skilled in the art that the exemplary embodiment described above is a specific example of the following aspects.

### [Aspect 1]

A battery comprising a first electrode layer, a separator layer and a second electrode layer that are stacked in this order, wherein
the second electrode layer includes:
   a central electrode portion that contains a central electrode active material; and
   an end electrode portion that contains an end electrode active material and is in contact with an end of the central electrode portion in an orthogonal direction orthogonal to a stacking direction, and
a filling factor of the end electrode portion is smaller than a filling factor of the central electrode portion.

In this battery, the filling factor of the end electrode portion is smaller than the filling factor of the central electrode portion. Therefore, when the second electrode layer expands and contracts during charging and discharging of the battery, the expansion and contraction of the second electrode layer are effectively absorbed by the pores of the end electrode portion, and thus, the occurrence of cracking at the end of the second electrode layer is suppressed.

### [Aspect 2]

The battery according to Aspect 1, wherein
the first electrode layer includes:
   a first electrode portion that contains an electrode active material; and
   a resin portion that is in contact with an end of the first electrode portion in the orthogonal direction, and
the end electrode portion includes an insulating facing element that is in contact with one end of the central electrode portion in the orthogonal direction and faces at least a part of the resin portion with the separator layer interposed therebetween.

In this aspect, the insulating facing element is formed in the region that faces the resin portion of the first electrode layer, i.e., the region where the ion movement path is relatively narrow. Therefore, degradation in battery performance caused by a decrease in filling factor is suppressed.

### [Aspect 3]

The battery according to Aspect 2, wherein
the end electrode portion further includes an electrode facing element that is in contact with the other end of the central electrode portion in the orthogonal direction and faces the first electrode portion with the separator layer interposed therebetween.

In this aspect, the occurrence of cracking at both ends of the second electrode layer in the orthogonal direction is suppressed.

### [Aspect 4]

The battery according to Aspect 3, wherein
a length of the insulating facing element in the orthogonal direction is longer than a length of the electrode facing element in the orthogonal direction.

In this aspect, an amount of reaction in the insulating facing element is smaller than an amount of reaction in the electrode facing element. Therefore, it is possible to suppress the occurrence of cracking at the end of the second electrode layer, while suppressing a decrease in amount of rection caused by a decrease in filling factor.

### [Aspect 5]

The battery according to any one of Aspects 1 to 4, wherein
the filling factor of the end electrode portion gradually becomes smaller with increasing distance from the central electrode portion in the orthogonal direction.

The amount of reaction tends to decrease toward the end in the orthogonal direction. Therefore, in this aspect, it is possible to more reliably suppress the occurrence of cracking at the end of the second electrode layer, while suppressing a decrease in amount of reaction caused by a decrease in filling factor of the end electrode portion of the second electrode layer.

### [Aspect 6]

The battery according to any one of Aspects 1 to 5, wherein
the end electrode active material is the same as the central electrode active material.

### [Aspect 7]

The battery according to any one of Aspects 1 to 5, wherein
the end electrode active material is different from the central electrode active material.

### [Aspect 8]

The battery according to any one of Aspects 1 to 5, wherein
the end electrode active material has a porosity higher than a porosity of the central electrode active material.

### [Aspect 9]

The battery according to any one of Aspects 1 to 8, wherein
the second electrode layer is a negative electrode layer, and
the central electrode active material and the end electrode active material contain Si.

### [Aspect 10]

The battery according to any one of Aspects 1 to 9, wherein
a volume of the end electrode portion is more than 0% and equal to or less than 15% of a total volume of the second electrode layer.

### [Aspect 11]

A solid-state battery, wherein
in the battery according to Aspect 1, the separator layer contains a solid electrolyte.

### [Aspect 12]

A method for manufacturing a battery including a first electrode layer, a separator layer and a second electrode layer that are stacked in this order, the method including
a second electrode layer forming step of forming the second electrode layer on the separator layer, wherein
the second electrode layer forming step includes:
   supplying an electrode active material onto the separator layer such that a thickness of an end adjacent to a central portion in an orthogonal direction orthogonal to a stacking direction becomes smaller than a thickness of the central portion in the orthogonal direction; and
   pressing the electrode active material such that the thickness of the central portion and the thickness of the end become equal to each other.

In this method for manufacturing the battery, since the electrode active material is supplied onto the separator layer such that the thickness of the end becomes smaller than the thickness of the central portion and the electrode active material is pressed such that the thickness of the central portion and the thickness of the end become equal to each other, the battery in which a filling factor of the end of the second electrode layer is smaller than a filling factor of the central portion of the second electrode layer is manufactured. Therefore, the occurrence of cracking at the end of the second electrode layer when the second electrode layer expands and contracts is suppressed.

Although the embodiment of the present disclosure has been described, it should be understood that the embodiment disclosed herein is illustrative and non-restrictive in every respect. The scope of the present disclosure is defined by the terms of the claims, and is intended to include any modifications within the scope and meaning equivalent to the terms of the claims.

## Claims

1. A battery (1) comprising a first electrode layer (200), a separator layer (300) and a second electrode layer (400) that are stacked in this order, wherein
the second electrode layer includes:
a central electrode portion (410) that contains a central electrode active material; and
an end electrode portion (420) that contains an end electrode active material and is in contact with an end of the central electrode portion (410) in an orthogonal direction orthogonal to a stacking direction, and
a filling factor of the end electrode portion (420) is smaller than a filling factor of the central electrode portion (410).

2. The battery according to claim 1, wherein
the first electrode layer (200) includes:
a first electrode portion (210) that contains an electrode active material; and
a resin portion (220) that is in contact with an end of the first electrode portion in the orthogonal direction, and
the end electrode portion (420) includes an insulating facing element (422) that is in contact with one end of the central electrode portion (410) in the orthogonal direction and faces at least a part of the resin portion (220) with the separator layer (300) interposed therebetween.

3. The battery according to claim 2, wherein
the end electrode portion (420) further includes an electrode facing element (424) that is in contact with the other end of the central electrode portion (410) in the orthogonal direction and faces the first electrode portion with the separator layer (300) interposed therebetween.

4. The battery according to claim 3, wherein
a length of the insulating facing element (422) in the orthogonal direction is longer than a length of the electrode facing element (424) in the orthogonal direction.

5. The battery according to any one of claims 1 to 4, wherein
the filling factor of the end electrode portion (420) gradually becomes smaller with increasing distance from the central electrode portion (410) in the orthogonal direction.

6. The battery according to any one of claims 1 to 5, wherein
the end electrode active material is the same as the central electrode active material.

7. The battery according to any one of claims 1 to 5, wherein
the end electrode active material is different from the central electrode active material.

8. The battery according to any one of claims 1 to 5, wherein
the end electrode active material has a porosity higher than a porosity of the central electrode active material.

9. The battery according to any one of claims 1 to 8, wherein
the second electrode layer (400) is a negative electrode layer, and
the central electrode active material and the end electrode active material contain Si.

10. The battery according to any one of claims 1 to 9, wherein
a volume of the end electrode portion (420) is more than 0% and equal to or less than 15% of a total volume of the second electrode layer.

11. A solid-state battery, wherein
in the battery according to claim 1, the separator layer (300) contains a solid electrolyte.

12. A method for manufacturing a battery (1) including a first electrode layer (200), a separator layer (300) and a second electrode layer (400) that are stacked in this order, the method comprising
a second electrode layer forming step of forming the second electrode layer on the separator layer (300), wherein
the second electrode layer forming step includes:
supplying an electrode active material onto the separator layer (300) such that a thickness of an end (42) adjacent to a central portion (41) in an orthogonal direction orthogonal to a stacking direction becomes smaller than a thickness of the central portion (41) in the orthogonal direction; and
pressing the electrode active material such that the thickness of the central portion (41) and the thickness of the end (42) become equal to each other.
